# EUROPÄISCHE PATENTSCHRIFT

(11) **EP 2 282 912 B1**
(45) Veröffentlichungstag und Bekanntmachung des Hinweises auf die Patenterteilung: **27.03.2013**
(21) Anmeldenummer: 09757303.4
(22) Anmeldetag: 04.06.2009
(51) Int. Cl.: B60R 13/00, B60R 21/215

(54) **HERSTELLER- EMBLEM MIT BEFESTIGUNG FÜR AIRBAGABDECKUNG**
MANUFACTURER'S EMBLEM WITH A FASTENING FOR AN AIRBAG COVERING
EMBLEME DE CONSTRUCTEUR AVEC FIXATION POUR COUVERCLE DE COUSSIN GONFLABLE

(30) Priorität: 07.06.2008 DE 102008027303
(43) Veröffentlichungstag der Anmeldung: 16.02.2011
(73) Patentinhaber: Autoliv Development AB, 447 83 Vårgårda (SE)
(72) Erfinder: MACKENSEN, Jürgen, 85221 Dachau (DE); NEBEL, Raimund, 86836 Obermeitingen (DE)
(74) Vertreter: Müller, Karl-Ernst
(86) Internationale Anmeldenummer: PCT/EP2009/004026
(87) Internationale Veröffentlichungsnummer: WO 2009/146920

(56) Entgegenhaltungen:
- EP-A- 0 965 489
- DE-A1- 19 828 975
- DE-U1- 29 507 628
- JP-A- 11 189 119
- US-A- 1 727 026
- US-A1- 2005 156 409

## Beschreibung

Die Erfindung betrifft eine Fahrzeugbaugruppe, insbesondere Airbagabdeckung, mit einer daran befestigten Platte, beispielsweise als Träger eines Herstelleremblems, wobei die Platte die Fahrzeugbaugruppe mit über ihren Umfang verteilt angeordneten Zungen in an der Fahrzeugbaugruppe angeordneten Durchbrechungen durchgreift und die Zungen in auf der Rückseite der Fahrzeugbaugruppe passend ausgeformte Vertiefungen um eine zwischen den Durchbrechungen und den Vertiefungen angeordnete Biegekante eingebogen sind, wobei wenigstens eine der Zungen ausgehend von einem, durch die Durchbrechungen in der Fahrzeugbaugruppe reichenden schmaleren Halsbereich an ihrem freien Ende mit einer Querschnittserweiterung versehen ist und die an der Fahrzeugbaugruppe ausgebildeten Vertiefungen eine der Kontur der wenigstens einen Zunge entsprechende Gestalt aufweisen.

Eine Fahrzeugbaugruppe mit den vorgenannten Merkmalen in Form einer Airbagabdeckung ist in der US 2005/0156409 A1 beschrieben. Soweit es üblich ist, insbesondere auf der Abdeckung eines im Lenkrad eines Kraftfahrzeuges angeordneten Airbags eine Platte mit einem darauf befindlichen Herstellersymbol anzubringen, ist bei der aus der US 2005/0156409 A1 bekannten Abdeckung vorgesehen, an der Platte von deren äußerem Rand im rechten Winkel zur Platte abstehende Zungen auszubilden. Diese Zungen werden beim Aufstecken der Platte auf die Lenkradabdeckung durch daran entsprechend ausgebildete schlitzförmige Durchbrechungen geführt und auf der Rückseite beziehungsweise Innenseite der Abdeckung in Anlage an der Abdeckung umgebogen. Zur Fixierung der Zungen nach dem Umbiegen sind nach einem Ausführungsbeispiel an der Rückseite der Abdeckung Strukturen in Form von Leisten ausgebildet, die eine auf die Form der Zungen abgestimmte Form aufweisen und insoweit ais Vertiefungen die freien Enden der umgebogenen Zungen passend in sich aufnehmen. Hierbei ist zwischen den Durchbrechungen und den Vertiefungen der Lenkradabdeckung eine entsprechende Biegekante angeordnet. Bei dem entsprechenden Ausführungsbeispiel weisen die Zungen ausgehend von einem, durch die Durchbrechungen in der Fahrzeugbaugruppe reichenden schmaleren Halsbereich an ihrem freien Ende eine Querschnittserweiterung auf.

Mit der bekannten Anbringung ist der Nachteil verbunden, dass die Zungen bei entsprechender Kraftausübung über die zugeordnete Biegekante aus den Vertiefungen herausgleiten beziehungsweise daraus herausgezogen werden können. Soweit bei Airbagabdeckungen bei Auslösen des Airbags entsprechende Kräfte einwirken können, ist diese Art der Anbringung der Metallplatte an einer Airbagabdeckung nicht sicher genug.

Weiterhin ist aus der DE 198 28 975 A die Befestigung einer Platte an einer Airbagabdeckung beschrieben, wobei an der der Airbagabdeckung zugewandten Unterseite der Platte ein federnd ausgebildeter Clip angeordnet ist, der in eine in der Fahrzeugbaugruppe ausgebildete Durchbrechung eingreift und diese auf der der Platte abgewandten Rückseite der Fahrzeugbaugruppe mit federnd aufweitbaren Haken hintergreift.

Der Erfindung liegt die Aufgabe zugrunde, die Befestigung einer Platte an einer Fahrzeugbaugruppe entsprechend den gattungsgemäßen Merkmalen noch zu verbessern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass die Vertiefungen in der Fahrzeugbaugruppe zweistufig ausgebildet sind mit einer ersten äußeren, der Aufnahme der in einem ersten Schritt um die Biegekante umgebogenen Zunge dienenden Stufe und mit einer daran nach innen einspringenden zweiten Stufe zur Aufnahme der in einem zweiten Schritt in die zweite Stufe der Vertiefungen eingepressten Zunge, wobei der schmalere Halsbereich der Zunge in dem zweiten Schritt zu einem dem Abstand zwischen der ersten Vertiefungsstufe und der zweiten Vertiefungsstufe entsprechenden Absatz verformt ist und wobei die zweite Vertiefungsstufe gegenüber der ersten Vertiefungsstufe radial in Richtung der Biegekante um das Maß der durch das Einformen des Absatzes bewirkten Längenverkürzung des schmaleren Halsbereiches der Zunge versetzt ist.

Über den wiederum ausgebildeten Formschluss zwischen Zunge und Vertiefung hinaus verhindert auch der in den schmaleren Halsbereich der Zunge eingeformte Absatz ein Herausziehen der Zunge aus der Vertiefung, weil der eingeformte Absatz im Winkel zu der beim versuchten Herausziehen der Zunge aus der Vertiefung wirkenden Kraftrichtung ausgeformt ist und zusätzlich eine Rückverformung des Absatzes erforderlich wäre, um die Zunge aus der Vertiefung zu lösen. Dabei ist dem Umstand Rechnung getragen, dass das Einformen des Absatzes in den schmaleren Halsbereich der Zunge zwangsläufig eine Verkürzung von deren Längserstreckung herbeiführt, so dass zur Aufrechterhaltung des Formschlusses zwischen der Zunge und der zugeordneten Vertiefung ein radialer Versatz der beiden Vertiefungsstufen gegeneinander vorgesehen ist.

Die Anwendung der Erfindung ist dabei nicht auf die Befestigung von Platten aus Metall oder Kunststoff an Airbagabdeckungen beschränkt, vielmehr ergeben sich entsprechende Befestigungsprobleme und -anforderungen auch bei anderen Fahrzeugteilen wie beispielsweise Kühlergrills, Radkappen etc.

Nach einem Ausführungsbeispiel der Erfindung weist die einzelne Zunge eine einfache und preisgünstig herzustellende Kontur auf, soweit die Zungen eine insgesamt pfeilförmige Kontur mit dem schmaleren Halsbereich und einer pfeilspitzenartigen Verbreiterung aufweisen.

Nach einem Ausführungsbeispiel der Erfindung kann vorgesehen sein, dass alle an der Platte vorgesehenen Zungen einen schmaleren Halsbereich und an ihrem freien Ende eine Querschnittserweiterung aufweisen.

In der Zeichnung ist ein Ausführungsbeispiel der Erfindung wiedergegeben, welches nachstehend beschrieben ist. Es zeigen:
- Fig. 1: eine Rückansicht auf eine Airbagabdeckung als die eine Metallplatte tragende Fahrzeugbaugruppe mit daran angebrachten Vertiefungen zur Aufnahme von nicht dargestellten Zungen der an der Fahrzeugbaugruppe zu befestigenden Metallplatte,
- Fig. 2: den Gegenstand der Figur 1 nach dem Durchstecken und Umbiegen der Zungen der Metallplatte in die erste Stufe der an der Airbagabdeckung ausgebildeten Vertiefungen,
- Fig. 3: den Gegenstand der Figur 2 nach dem Einpressen der umgebogenen Zungen in die zweite Stufe der Vertiefungen.

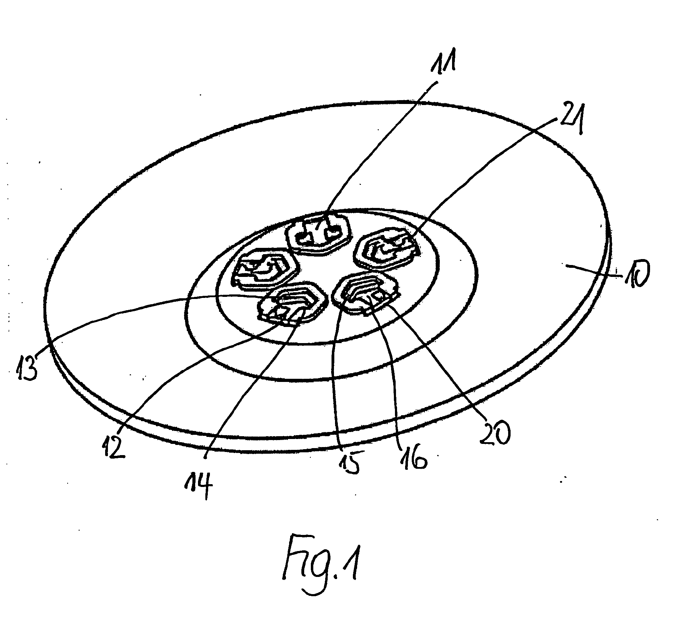

Wie sich aus Figur 1 ergibt, sind an der in der Draufsicht dargestellten Rückseite einer Airbagabdeckung 10 als Fahrzeugbaugruppe Vertiefungen 11 zur Aufnahme von in der Figur 1 noch nicht ersichtlichen Befestigungszungen einer auf der den Vertiefungen 11 abgewandten (Vorder)Seite der Abdeckung 10 aufgesetzten Metallplatte ausgebildet. Soweit die Vertiefungen 11 formentsprechend mit der Kontur der nicht dargestellten Zungen ausgebildet sind, beziehen sich die nachstehenden Erläuterungen für die Formgebung der Vertiefungen 11 auch auf die Ausbildung der Zungen. Insofern sind Vertiefungen 11 und Zungen gleichermaßen mit einer pfeilförmigen Kontur ausgebildet, die jeweils einen schmaleren Halsbereich 12 und eine pfeilspitzenartige Querschnittserweiterung 13 aufweist. Entsprechend sind im Übergang zwischen den pfeilspitzenartigen Querschnittserweiterungen 13 und den schmaleren Halsbereichen 12 der Vertiefungen 11 Hinterschnittkanten 14 ausgebildet, an denen sich bei einer Zugbelastung in der Längsrichtung der Zungen beziehungsweise Vertiefungen 11 die pfeilspitzenartigen Querschnittserweiterungen 13 verhaken. Am äußeren radialen Ende der schmaleren Halsbereiche 12 sind Durchbrechungen 20 zum Durchstecken der Zungen ausgebildet, wobei zwischen den Durchbrechungen 20 und den Vertiefungen 12 eine Biegekante 21 gebildet ist, um die die durch die Durchbrechungen 20 hindurch gesteckten Zungen umgebogen werden.

Die Vertiefungen sind zweistufig ausgebildet, mit einer ersten äußeren Vertiefungsstufe 15 und mit einer davon nach innen entspringenden zweiten Vertiefungsstufe 16. Wie sich aus Figur 1 ergibt, ist die zweite Vertiefungsstufe 16 gegenüber der ersten Vertiefungsstufe 15 radial um ein noch zu erläuterndes Maß in Richtung der Biegekante 21 versetzt.

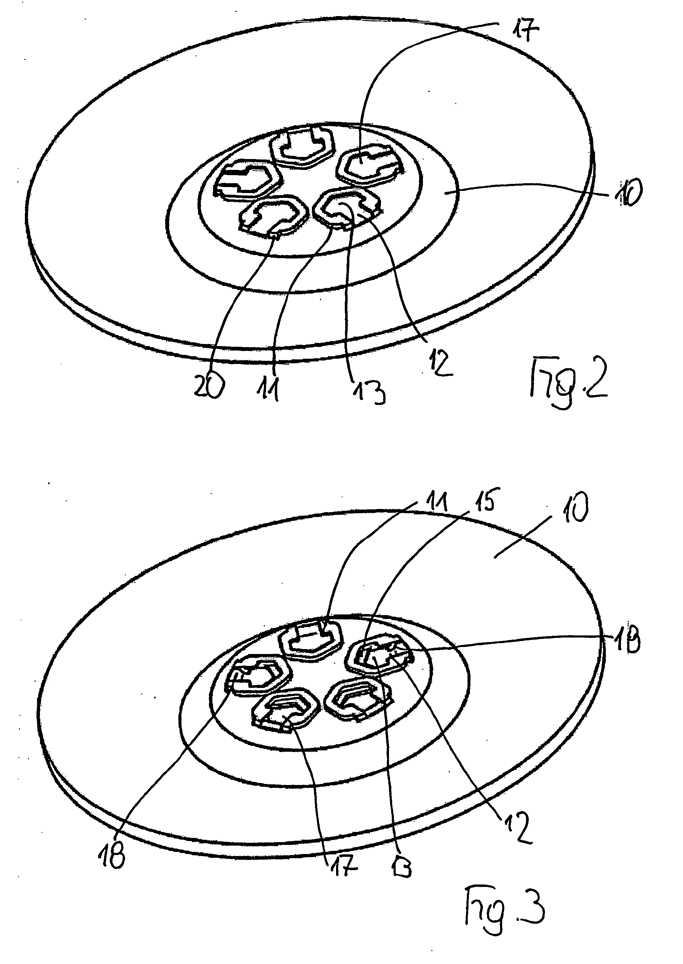

Wie sich aus Figur 2 ergibt, werden in einem ersten Schritt die durch die Durchbrechungen 20 hindurchgeführten Zungen 17 um die Biegekante 21 umgebogen und in die formentsprechend ausgebildete erste Vertiefungsstufe 15 eingebogen. Aus Figur 2 ist dabei schon die formentsprechende Aufnahme der Zungen 17 in den Vertiefungen 11 zu erkennen, wobei die Zungen 17 in der ersten Vertiefungsstufe 15 aufgenommen sind.

Wie sich aus Figur 3 ergibt, werden die bereits in die erste Vertiefungsstufe 15 eingebogenen Zungen 17 mittels eines entsprechend vorgesehenen Werkzeuges noch mal beaufschlagt und in diesem zweiten Schritt in die zweite Vertiefungsstufe 16 der Vertiefungen 11 eingepresst; bei diesem zweiten Schritt verformen sich die schmaleren Halsbereiche 12 der Zungen 17 zu einem dem Abstand zwischen der ersten Vertiefungsstufe 15 und der zweiten Vertiefungsstufe 16 entsprechenden Absatz 18, und soweit durch das Einformen des Absatzes 18 in den schmaleren Halsbereich 12 der Zungen 17 eine Längenverkürzung des jeweiligen schmaleren Halsbereiches 12 eintritt, ist die zweite Vertiefungsstufe 16 gegenüber der ersten Vertiefungsstufe 15 um eben das Maß der durch das Einformen des Absatzes 18 bewirkten Längenverkürzung radial versetzt, so dass auch nach dem Einpressen der Zungen 18 in die zweite Vertiefungsstufe 16 ein vollständiger Formschluss zwischen den Zungen 17 und den Vertiefungen 11 gegeben ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Fahrzeugbaugruppe (10), insbesondere Airbagabdeckung, mit einer daran befestigten Platte, beispielsweise als Träger eines Herstelleremblems, wobei die Platte die Fahrzeugbaugruppe (10) mit über ihren Umfang verteilt angeordneten Zungen (17) in an der Fahrzeugbaugruppe (10) angeordneten Durchbrechungen (20) durchgreift und die Zungen (17) in auf der Rückseite der Fahrzeugbaugruppe (10) passend ausgeformte Vertiefungen (11) um eine zwischen den Durchbrechungen (20) und den Vertiefungen (11) angeordnete Biegekante (21) eingebogen sind, wobei wenigstens eine der Zungen (17) ausgehend von einem, durch die Durchbrechungen (20) in der Fahrzeugbaugruppe (10) reichenden schmaleren Halsbereich (12) an ihrem freien Ende mit einer Querschnittserweiterung (13) versehen ist und die an der Fahrzeugbaugruppe (10) ausgebildeten Vertiefungen (11) eine der Kontur der wenigstens einen Zunge (17) entsprechende Gestalt aufweisen, **dadurch gekennzeichnet, dass** die Vertiefungen (11) in der Fahrzeugbaugruppe (10) zweistufig ausgebildet sind mit einer ersten äußeren, der Aufnahme der in einem ersten Schritt um die Biegekante (21) umgebogenen Zunge (17) dienenden Stufe (15) und mit einer daran nach innen einspringenden zweiten Stufe (16) zur Aufnahme der in einem zweiten Schritt in die zweite Stufe (16) der Vertiefungen (11) eingepressten Zunge (17), wobei der schmalere Halsbereich (12) der Zunge (17) in dem zweiten Schritt zu einem dem Abstand zwischen der ersten Vertiefungsstufe (15) und der zweiten Vertiefungsstufe (16) entsprechenden Absatz (18) verformt ist und wobei die zweite Vertiefungsstufe (16) gegenüber der ersten Vertiefungsstufe (15) radial in Richtung der Biegekante (21) um das Maß der durch das Einformen des Absatzes (18) bewirkten Längenverkürzung des schmaleren Halsbereiches (12) der Zunge (17) versetzt ist.

2. Fahrzeugbaugruppe nach Anspruch 1, **dadurch gekennzeichnet, dass** die Zunge (17) eine insgesamt pfeilförmige Kontur mit dem schmaleren Halsbereich (12) und einer pfeilspitzenartigen Verbreiterung (13) aufweist.

3. Fahrzeugbaugruppe nach Anspruch 1 oder 2, **dadurch gekennzeichnet, dass** alle an der Platte vorgesehenen Zungen (17) einen schmaleren Halsbereich (12) und an ihrem freien Ende eine Querschnittserweiterung (13) aufweisen.

## Claims

1. Vehicle subassembly (10), in particular airbag cover, with a plate fastened thereto, for example as a support for a manufacturer's emblem, wherein the plate reaches with tongues (17), which are distributed over its circumference, through the vehicle subassembly (10) in apertures (20) arranged on the vehicle subassembly (10) and the tongues (17) are bent into suitably formed cavities (11) on the back of the vehicle subassembly (10) around a bending edge (21) arranged between the apertures (20) and the cavities (11), wherein at least one of the tongues (17), starting out from a narrower neck area (12) reaching through the apertures (20) in the vehicle subassembly (10), is provided at its free end with a cross-sectional expansion (13) and the cavities (11) formed on the vehicle subassembly (10) have a design corresponding to the contour of the at least one tongue (17), **characterised by** that the cavities (11) are formed in the vehicle subassembly (10) in two stages, with a first, outer stage (15) serving to take up the tongue (17) bent around the bending edge (21) in a first step and with a second stage (16) thereon jumping inwards to take up the tongue (17) pressed into the second stage (16) of the cavities (11) in a second step, wherein the narrower neck area (12) of the tongue (17) is deformed in the second step to a shoulder (18) corresponding to the distance between the first cavity stage (15) and the second cavity stage (16) and wherein the second cavity stage (16) is offset compared with the first cavity stage (15) radially in the direction of the bending edge (21) by the measure of the length contraction of the narrower neck area (12) of the tongue (17) caused by the moulding of the shoulder (18).

2. Vehicle subassembly according to claim 1, **characterised by** that the tongue (17) has an arrow-shaped contour overall with the narrower neck area (12) and an arrowhead-shaped widening (13).

3. Vehicle subassembly according to claim 1 or 2, **characterised by** that all tongues (17) provided on the plate have a narrower neck area (12) and a cross-sectional expansion (13) at their free end.

## Revendications

1. Sous-ensemble de véhicule (10), en particulier couvercle de coussin gonflable, avec une plaque fixée à celui-ci, par exemple en tant que support d'un emblème de constructeur, dans lequel la plaque passe dans le sous-ensemble de véhicule (10) avec des languettes (17) disposées de manière distribuée autour de sa circonférence dans des ouvertures (20) disposées sur le sous-ensemble de véhicule (10) et les languettes (17) sont pliées dans des creux (11) formés de manière adaptée sur la face arrière du sous-ensemble de véhicule (10) autour d'un bord de pliage (21) disposé entre les ouvertures (20) et les creux (11), dans lequel au moins une des languettes (17) est pourvue à son extrémité libre d'un élargissement de section (13) à partir d'une zone de col (12) plus étroite s'étendant à travers les ouvertures (20) dans le sous-ensemble de véhicule (10) et les creux (11) formés sur le sous-ensemble de véhicule (10) présentent une forme correspondant au contour de la au moins une languette (17), **caractérisé en ce que** les creux (11) dans le sous-ensemble de véhicule (10) sont formés à deux niveaux avec un premier niveau (15) extérieur servant à la réception de la languette (17) pliée dans une première étape autour du bord de pliage (21) et avec un second niveau (16) adjacent rentrant vers l'intérieur pour la réception de la languette (17) pressée dans le second niveau (16) des creux (11) dans une seconde étape, dans lequel la zone de col (12) plus étroite de la languette (17) est déformée dans la seconde étape en un palier (18) correspondant à l'écart entre le premier niveau de creux (15) et le second niveau de creux (16) et dans lequel le second niveau de creux (16) est décalé par rapport au premier niveau de creux (15) radialement dans la direction du bord de pliage (21) par la mesure du raccourcissement de longueur de la zone de col (12) plus étroite de la languette (17) obtenu par la formation du palier (18).

2. Sous-ensemble de véhicule selon la revendication 1, **caractérisé en ce que** la languette (17) présente un contour dans l'ensemble en forme de flèche avec la zone de col (12) plus étroite et un élargissement (13) de type en pointe de flèche.

3. Sous-ensemble de véhicule selon la revendication 1 ou 2, **caractérisé en ce que** toutes les languettes (17) prévues sur la plaque présentent une zone de col (12) plus étroite et un élargissement de section (13) à leur extrémité libre.
